Europäisches Patentamt

European Patent Office

Office européen des brevets

(11) Veröffentlichungsnummer: **0 267 450 B1**

# EUROPÄISCHE PATENTSCHRIFT

(45) Veröffentlichungstag der Patentschrift: **22.04.92**

(21) Anmeldenummer: **87114930.8**

(22) Anmeldetag: **13.10.87**

(51) Int. Cl.5: **B60N 2/20**, B60R 22/26

(54) **Rückenlehnenverriegelung für einen mit Sicherheitsgurten ausgerüsteten Fahrzeugsitz.**

(30) Priorität: **15.10.86 DE 3635071**

(43) Veröffentlichungstag der Anmeldung:
**18.05.88 Patentblatt  88/20**

(45) Bekanntmachung des Hinweises auf die
Patenterteilung:
**22.04.92 Patentblatt  92/17**

(84) Benannte Vertragsstaaten:
**DE FR GB IT SE**

(56) Entgegenhaltungen:
**EP-A- 0 217 175**
**DE-A- 2 747 398**
**DE-A- 2 923 550**
**DE-A- 2 924 144**
**US-A- 3 410 600**

**PATENT ABSTRACTS OF JAPAN, Band 11,
Nr. 16 (M-554)[2463], 16. Januar 1987; & JP-
A-61 191 453 (NISSAN MOTOR CO., LTD)
26-08-1986**

(73) Patentinhaber: **AUTOFLUG GMBH & CO FAHR-
ZEUGTECHNIK**
**Industriestrasse 10**
**W-2084 Rellingen(DE)**

(72) Erfinder: **Singer, Klaus-Peter**
**Tegelsbarg 77**
**W-2000 Hamburg 65(DE)**

(74) Vertreter: **Müller, Karl-Ernst, Dr. et al
Patentanwälte Becker & Müller Eisenhüttenstrasse 2**
**W-4030 Ratingen 1(DE)**

## Beschreibung

Die Erfindung betrifft einen Fahrgastsitz für Kraftfahrzeuge mit einem am Sitz angeordneten Sicherheitsgurt, dessen zugehöriger Sicherheitsgurtaufroller am Sitz selbst angeordnet ist, wobei der Fahrgastsitz mit einer klappbar ausgebildeten, mit der Fahrzeugkarosserie zu arretierenden Rückenlehne versehen und eine Verriegelungseinrichtung für die Arretierung der Rückenlehne am Gehäuse des Gurtaufrollers kraftübertragend angeordnet ist und die Verriegelungseinrichtung mit einem fahrzeugfesten Riegel zusammenwirkt.

Ein gattungsgemäßer Fahrgastsitz mit einer klappbaren Rückenlehne und einem in der Rückenlehne angeordneten Gurtaufroller ist in der JP-A-61-191 453 beschrieben; bei dem bekannten Gegenstand ist am Gurtaufrollergehäuse eine Verriegelungseinrichtung derart angeorndet, daß sie in der hochgeklappten Stellung der Rückenlehne einen fahrzeugfesten Riegel umfaßt, so daß die beispielsweise bei einem Unfall auftretenden Kräfte über das Gehäuse des Gurtaufrollers, die daran angeordnete Verriegelungseinrichtung und den fahrzeugfesten Riegel unmittelbar in die Fahrzeugkarosserie abgeleitet werden. Die vorgenannte Druckschrift zeigt dabei nur die Verriegelung der Rückenlehne in der aufrechten Stellung.

Aus der DE-A-2 923 550 ist eine Gestaltung bekannt, bei welcher für die Ableitung der in einem Gurtaufroller im Unfallgeschehen auftretenden Kräfte in die Fahrzeugkarosserie zusätzlich zur Lehnenverriegelung eine kraftübertragende Hebelanordnung vorgesehen ist. Diese zusätzliche Maßnahme beeinflußt die Ausbildung der Lehnenverriegelung nicht und erhöht insbesondere den Aufwand für die Anbringung eines Sicherheitsgurtes in der Rückenlehne eines Fahrgastsitzes.

Der Erfindung liegt die Aufgabe zugrunde, bei einem gattungsgemäßen Fahrgastsitz dessen Rückenlehne in einfacher Weise auch in ihrer geklappten Einstiegs- oder Ladestellung arretierbar einzurichten.

Die Lösung dieser Aufgabe ergibt sich aus dem Hauptanspruch; vorteilhafte Ausgestaltungen und Weiterbildungen der Erfindung sind in den Unteransprüchen angegeben.

Die Erfindung sieht im einzelnen vor, daß die Verriegelungseinrichtung zur Arretierung der Rückenlehne sowohl in der aufrechten Sitzstellung der Rückenlehne als auch in einer geklappten Einstiegs- oder Ladestellung der Rückenlehne eingerichtet ist. Hiermit ist der Vorteil verbunden, daß neben der unmittelbaren gradlinigen Kraftübertragung zwischen Gurtaufrollergehäuse und Fahrzeugkarosserie über die Lehnenverriegelung aufgrund der Doppelfunktion der Verriegelungseinrichtung in den beiden Stellungen der Rückenlehne sich die erfindungsgemäße Vorrichtung durch einen besonders geringen Platzbedarf auszeichnet, was bei den beengten Verhältnissen insbesondere in kleinen Fahrzeugen von wesentlicher Bedeutung ist. Ferner sind nur wenige zusammenwirkende Bauteile und schließlich ein geringes Gewicht der Gesamtvorrichtung als vorteilhaft anzumerken.

Soweit nach einem bevorzugten Ausführungsbeispiel die Verriegelungseinrichtung als am Gurtaufrollergehäuse angeordnete drehbewegliche Klauenscheibe ausgebildet ist, so ergibt sich dieses konstruktive Merkmal ebenfalls bereits aus der JP-A-61-191 453, wobei es im Rahmen der erfindungsgemäßen Ausbildung zweckmäßig ist, daß die Klauenscheibe sowohl für die Verriegelung in der aufrechten als auch in der umgeklappten Stellung der Rückenlehne eine Doppelfunktion übernimmt.

Hinsichtlich der Ausbildung des tragenden Gurtaufrollergehäuses ist der Vorteil zu erwähnen, daß das Gehäuse aus zwei spiegelbildlich gleichen Teilen zusammengesetzt sein kann, wodurch die Montage der Vorrichtung für die linke und rechte Fahrzeugseite erleichtert ist. Hinzu kommt, daß das Gurtaufrollergehäuse verriegelungsseitig auf eine geringere Breite abkröpfbar ist.

In der Zeichnung ist ein Ausführungsbeispiel der Erfindung wiedergegeben, welches nachstehend beschrieben wird.

Es zeigen:

Fig. 1      eine Seitenansicht eines Gurtaufrollers mit Lehnenverriegelung für die aufrechte Lehnenstellung,

Fig. 2      ausschnittsweise den Gegenstand der Figur 1 in einer weiteren Ansicht,

Fig. 3      die Lehnenverriegelung für die geklappte Lehnenstellung in Seitenansicht,

Fig. 4      ausschnittsweise den Gegenstand der Figur 3 in einer weiteren Ansicht.

Die Zeichnung zeigt nur unter Andeutung einer Rückenlehne 40 die Anordnung der Lehnenverriegelung an dem in der Rückenlehne untergebrachten Gurtaufroller unter Hinzunahme der fahrzeugfesten Teile, so daß die Gesamtvorrichtung mit deren Funktion hinreichend deutlich ist.

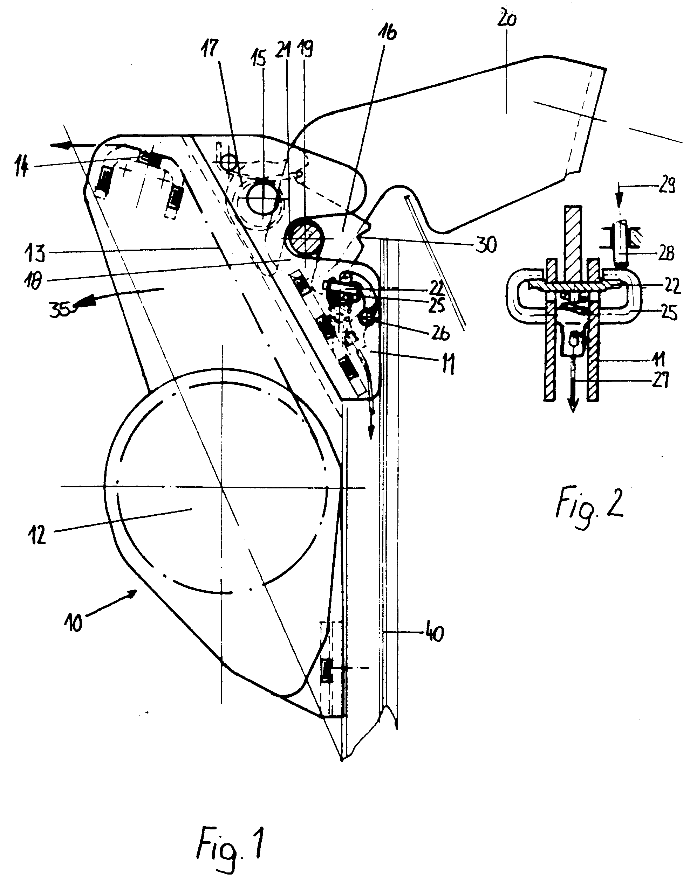

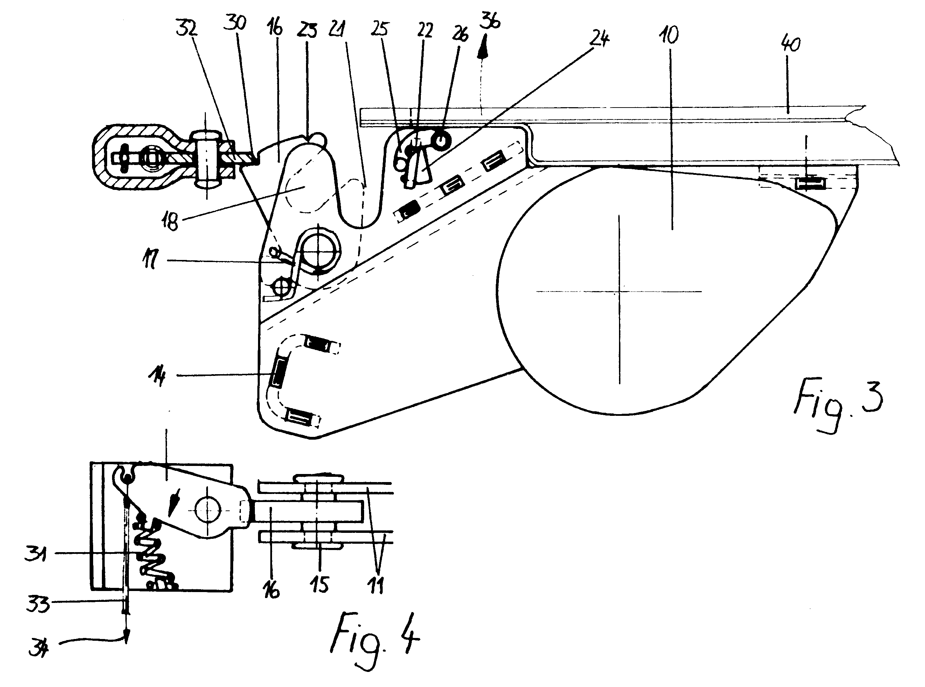

Die Darstellung der Figuren 1 und 2 zeigt die aufrechte Lehnenstellung und damit auch die aufrechte Stellung eines Gurtaufrollers 10 mit einem Gehäuse 11 mit ausgeprägten Seitenwänden. In dem Gurtaufroller 10 sitzt eine Aufwickelwelle 12, auf der Gurtband 13 aufgewickelt ist, welches über eine gehäusefest - 11 - angeordnete Gurtumlenkung 14 aus dem Gurtaufroller 10 herausgeführt ist. Am Gurtaufrollergehäuse 11 ist an einem Niet 15 eine Klauenscheibe 16 drehbar befestigt, welche unter der Wirkung einer gehäuseseitig eingehängten und sich mit der Klauenscheibe 16 verspannenden Feder 17 in einer ausgeschwenkten Position (Figur 3) gehalten ist. Der die Klauenscheibe 16 haltende Bereich des Gurtaufrollergehäuses 11 ist hierbei auf eine geringere Gehäusebreite abgekröpft (Figur 2 und 4). Die Klauenscheibe 16 weist eine Ausnehmung 18 auf, die einen an einem fahrzeugfest befestigten Halter 19 angeordneten Bolzen 20 bei Verriegelung der Rückenlehne einschließt.

Das Gurtaufrollergehäuse 11 weist im Schwenkbereich der Klauenscheibe 16 eine Einziehung 21 dergestalt auf, daß der Bolzen 20 bei verriegelter Rückenlehne im Tiefsten der Einziehung 21 gelegen ist. Da die Mittenlinien von Klauenscheibenausnehmung 18 und Gehäuseeinziehung 21 einander schneiden, ist bei verriegelter Rückenlehne der Bolzen 20 des gehäusefesten Halters 19 mit der Klauenscheibe 16 und somit wiederum mit dem Gehäuse 11 des Gurtaufrollers 10 fest verriegelt. Die unter der Wirkung der Feder 17 stehende Klauenscheibe 16 wird in dieser Stellung durch einen im Gurtaufrollergehäuse 11 schwenkbar gelagerten Riegel 22 gehalten, der aus einem Flachmaterial bestehen kann und federbelastet ist. Der Riegel 22 greift an einer Nase 23 der Klauenscheibe 16 an; der Riegel ist in einer Ausnehmung 24 in den seitlichen Schenkeln des Gurtaufrollergehäuses 11 zwischen der in Figur 1 gezeigten Verriegelungsstellung und einer Freigabestellung beweglich, in welcher der Riegel 22 die Nase 23 der Klauenscheibe 16 freigibt, so daß diese dann unter der Wirkung der Feder 17 ausschwenken kann.

Zur Betätigung des Riegels 22 ist in dem Gehäuse 11 ein Kipphebel 25 um einen Drehpunkt 26 schwenkbar gelagert, der auf den Riegel 22 entsprechend einwirkt. Die Betätigung des Kipphebels 25 (Figur 2) kann alternativ durch einen Bowdenzug 27 oder einen auf den Kipphebel 25 unmittelbar einwirkenden Stössel 28 geschehen, und zwar in Richtung des Pfeiles 29.

In Figur 3 ist die Stellung der vorbeschriebenen Bauteile der Lehnenverriegelung in der geklappten Stellung der Rückenlehne dargestellt. Hierbei ist die Klauenscheibe 16 ausgeschwenkt, so daß sie über das Gurtaufrollergehäuse 11 mit einer Haltenase 30 hinausragt. Mit der Haltenase 30 zusammenwirkend ist an einem fahrzeugfesten Teil der Karosserie eine Haltevorrichtung angeordnet, die aus einer mit einer Feder 31 belasteten Haltescheibe 32 besteht; diese Haltescheibe 32 hakt beim Herunterklappen der Rückenlehne hinter die Haltenase 30 der Klauenscheibe 16, so daß das Gurtaufrollergehäuse 11 und damit die Rückenlehne karosseriefest verriegelt ist. Zum Lösen der Haltescheibe 32 wird diese über einen Bowdenzug 33 in Richtung des Pfeils 34 gedreht und kommt so außer Eingriff mit der Haltenase 30 der Klauenscheibe 16, so daß die Lehne an der Haltevorrichtung 32 vorbei hochgeklappt werden kann.

Die erfindungsgemäße Vorrichtung arbeitet dabei folgendermaßen: Ausgehend von der verriegelten, hochgeklappten Stellung der Rückenlehne wird durch Betätigung entweder des Bowdenzuges 27 oder des Stössels 28 auf den Kipphebel 25 eingewirkt, wodurch dieser den Riegel 22 in der Ausnehmung 24 des Gurtaufrollergehäuses 11 so dreht, daß der Riegel 22 die Nase 23 der Klauenscheibe 16 freigibt; diese springt unter der Wirkung der Feder 17 auf und ermöglicht so dem Bolzen des karosseriefesten Halters 19, aus der Einziehung 21 des Gehäuses 11 herauszugleiten - die Rückenlehne kann in Richtung des Pfeiles 35 umgeklappt werden.

In dieser Stellung steht die Klauenscheibe 16 mit einer Haltenase 30 über das Gehäuse 11 vor und hakt in der dafür vorgesehenen geklappten Stellung hinter eine federbelastete, karosseriefest angeordnete Haltescheibe 32. Auf diese Weise ist in beiden Stellungen eine sichere Verriegelung mit geradem Kraftfluß gegeben. Zum Lösen dieser geklappten Stellung der Rückenlehne erfolgt durch Zug am Bowdenzug 33 eine Drehung der Haltescheibe 32, so daß diese die Haltenase 30 der Klauenscheibe 16 freigibt - die Rückenlehne kann in Richtung des Pfeils 36 wieder hochgeklappt werden.

Gegen Ende des Klappvorganges greift dabei der Bolzen 20 des karosseriefesten Halters 19 in die Einziehung 21 des Gurtaufrollergehäuses 11 ein und kommt damit in Berührung mit der zugeordneten inneren Kante der Ausnehmung 18 der Klauenscheibe 16 und dreht dabei die Klauenscheibe 16 mit, bis der Bolzen 20 im Tiefsten der Einziehung 21 gelegen ist. Aufgrund der durch die Mittenlinien der Ausnehmung 18 der Klauenscheibe 16 sowie der Einziehung 21 des Gehäuses 11 gegebenen Zuordnung der Teile zueinander wird der Bolzen von der ihn umschließenden Klauenscheibe 16 im Tiefsten der Einziehung 21 des Gehäuses 11 festgelegt, wobei die Klauenscheibe in dieser Endlage durch den federbelasteten Riegel 22 gehalten und verriegelt ist.

Aufgrund der Ausbildung des Gurtaufrollergehäuses 11 in Form von zwei einstückigen spiegelbildlichen Gehäuseteilen, in denen sowohl die Gurtaufwickelwelle 12 gelagert als auch die Verriegelungseinrichtung 16, 22 integriert ist, ergibt sich im Belastungsfall eine optimale Kraftübertragung mit einem direkten Kraftfluß von der Gurtaufwickelwelle 12 zum Verriegelungsteil, da letzteres weder angeschraubt noch angenietet noch sonstwie mit einer eine Schwachstelle darstellenden Verbindung versehen ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für de Verwirklichung der Erfindung in ihren verschiedenen Ausführungsformen wesentlich sein.

**Patentansprüche**

1. Fahrgastsitz für Kraftfahrzeuge mit einem am Sitz angeordneten Sicherheitsgurt, dessen zugehöriger Sicherheitsgurtaufroller (10) am Sitz selbst angeordnet ist, wobei der Fahrgastsitz mit einer klappbar ausgebildeten, mit der Fahrzeugkarosserie zu arretierenden Rückenlehne (40) versehen und eine Verriegelungseinrichtung (16) für die Arretierung der Rückenlehne (40) am Gehäuse (11) des Gurtaufrollers (10) kraftübertragend angeordnet ist und die Verriegelungseinrichtung (16) mit einem fahrzeugfesten Riegel (20) zusammenwirkt, dadurch gekennzeichnet, daß die Verriegelungseinrichtung (16) zur Arretierung der Rückenlehne (40) sowohl in einer aufrechten Sitzstellung der Rückenlehne als auch in einer geklappten Einstiegs- oder Ladestellung der Rückenlehne eingerichtet ist.

2. Fahrgastsitz nach Anspruch 1, dadurch gekennzeichnet, daß die Verriegelungseinrichtung (16) als drehbewegliche Klauenscheibe ausgebildet ist, welche in den beiden Arretierungsstellungen der Rückenlehne mit fahrzeugfesten Riegeln (20, 32) zusammenwirkt.

3. Fahrgastsitz nach Anspruch 2, dadurch gekennzeichnet, daß die Klauenscheibe (16) eine Ausnehmung (18) zur Aufnahme eines fahrzeugfest an einem Halter (20) angeordneten Bolzens (19) aufweist und daß das Gurtaufrollergehäuse (11) eine zur Aufnahme des Bolzens (19) geeignete Einziehung (21) aufweist, wobei die Mittellinien der Ausnehmung (18) und der Einziehung (21) einander schneiden.

4. Fahrgastsitz nach Anspruch 3, dadurch gekennzeichnet, daß die Anbringung des Halters (20) der Verriegelung der Rückenlehne (40) in ihrer aufrechten Stellung dient und daß in dieser Verriegelungsposition der Bolzen (19) im Tiefsten der Einziehung (21) des Gurtaufrollergehäuses (11) gelegen und von der kreuzenden Ausnehmung (18) der Klauenscheibe (16) übergriffen und festgelegt ist.

5. Fahrgastsitz nach Anspruch 3 oder 4, dadurch gekennzeichnet, daß die Klauenscheibe (16) mit einer in deren Öffnungsstellung gerichteten Federkraft (17) belastet und über eine am Gehäuse (11) des Gurtaufrollers (10) gehaltene Betätigungsvorrichtung (27, 28) ver- und entriegelbar ist.

6. Fahrgastsitz nach Anspruch 5, dadurch gekennzeichnet, daß in einer Ausnehmung (24) des Gurtaufrollergehäuses (11) schwenkbar ein federbelasteter Riegel (22) gelagert ist, welcher mit einer äußeren Kante in der Verriegelungsstellung der Klauenscheibe (16) vor einer an dieser ausgebildeten Nase (23) liegt.

7. Fahrgastsitz nach Anspruch 5 oder 6, dadurch gekennzeichnet, daß im Gurtaufrollergehäuse (11) ein Kipphebel (25) drehbar gelagert ist, dessen Verschwenkung um einen Drehpunkt (26) den Riegel (22) in der Ausnehmung (24) von der Nase (23) der Klauenscheibe (16) wegbewegt.

8. Fahrgastsitz nach Anspruch 7, dadurch gekennzeichnet, daß die Verschwenkung des Kipphebels (25) durch einen Bowdenzug (27) herbeiführbar ist.

9. Fahrgastsitz nach Anspruch 7, dadurch gekennzeichnet, daß die Verschwenkung des Kipphebels (25) über einen entsprechend gehaltenen und geführten Stössel (28) herbeiführbar ist.

10. Fahrgastsitz nach einem der Ansprüche 2 - 10, dadurch gekennzeichnet, daß die Klauenscheibe (16) an einem in Öffnungsstellung ausgeschwenkten Abschnitt eine Haltenase (30) aufweist, die in geklappter Position der Rückenlehne hinter eine karosseriefest` angebrachte Haltevorrichtung (32) greift.

11. Fahrgastsitz nach Anspruch 10, dadurch gekennzeichnet, daß die Haltevorrichtung aus einer drehbar an der Karosserie befestigten, federbelasteten (31) Haltescheibe (32) besteht, deren Drehbetätigung durch einen Bowdenzug (33) herbeiführbar ist.

12. Fahrgastsitz nach einem der Ansprüche 1 - 11, dadurch gekennzeichnet, daß das Gehäuse (11) aus zwei einstückig ausgebildeten, spiegelbildlichen Gehäuseteilen besteht, in denen sowohl die Gurtaufwickelwelle (12) gelagert als auch die Verriegelungseinrichtung (16, 22) für die Lehnenverriegelung integriert ist.

**Claims**

1. Passenger seat for motor vehicles having a safety belt which is arranged on the seat and the pertinent safety belt winding means (10) of which is arranged on the seat itself, with the passenger seat being provided with a back rest (40), which is formed so that it can be folded and which can be locked with the vehicle body, and with a locking device (16) for locking the back rest (40) being arranged on the housing (11) of the belt winding means (10) in a force-transmitting manner, and with the locking device (16) cooperating with a locking bar (20) which is secure with respect to the vehicle, characterised in that the locking device (16) is set up for the purpose of locking the back rest (40) both in an upright seat position of the back rest and also in a folded position of the back rest for entering or loading.

2. Passenger seat according to claim 1, characterised in that the locking device (16) is formed as a rotatable claw plate which in the two locking positions of the back rest cooperates with locking bars (20, 32) which are secure with respect to the vehicle.

3. Passenger seat according to claim 2, characterised in that the claw plate (16) has a rebate (18) for receiving a pin (19) which is arranged on a holder (20) in a manner secure with respect to the vehicle and in that the housing (11) of the belt winding means has a recess (21) which is suitable for receiving the pin (19), with the centre lines of the rebate (18) and the recess (21) intersecting each other.

4. Passenger seat according to claim 3, characterised in that the mounting of the holder (20) serves to lock the back rest (40) in its upright position and in that in this locked position the pin (19) is positioned in the deepest point of the recess (21) of the housing (11) of the belt winding means and is overlapped and fixed by the crossing rebate (18) of the claw plate (16).

5. Passenger seat according to claim 3 or 4, characterised in that the claw plate (16) is loaded with a spring force (17), directed into the opening position of said plate, and can be locked and unlocked by way of an operating arrangement (27, 28) which is held on the housing (11) of the belt winding means (10).

6. Passenger seat according to claim 5, characterised in that swivel-mounted in a rebate (24) of the housing (11) of the belt winding means there is a spring-loaded locking bar (22) which with an outer edge in the locking position of the claw plate (16) lies in front of a lug (23) formed on the latter.

7. Passenger seat according to claim 5 or 6, characterised in that a rocking lever (25) is pivotably mounted in the housing (11) of the belt winding means, the swing of which lever about a fulcrum point (26) moves the locking bar (22) in the rebate (24) away from the lug (23) of the claw plate (16).

8. Passenger seat according to claim 7, characterised in that the swing of the rocking lever (25) can be brought about by means of a Bowden cable (27).

9. Passenger seat according to claim 7, characterised in that the swing of the rocking lever (25) can be brought about by way of a push rod (28) which is held and guided in a corresponding manner.

10. Passenger seat according to one of the claims 2 - 10, characterised in that the claw plate (16) has a holding lug (30) on a section which is swung out in the open position, which lug in the folded position of the back rest engages behind a holding arrangement (32) which is mounted in a manner secure with respect to the body.

11. Passenger seat according to claim 10, characterised in that the holding arrangement consists of a spring-loaded (31) holding plate (32) which is secured to the body in a pivotable manner and the pivoting operation of which can be brought about by means of a Bowden cable (33).

12. Passenger seat according to one of the claims 1 to 11, characterized in that the housing (11) consists of two mirror-inverted housing portions which are formed in one piece and in which both the belt winding shaft (12) is mounted and the locking device (16, 22) for locking the rest is also integrated.

**Revendications**

1. Siège de passager équipé d'une ceinture de sécurité disposée sur le siège, dont l'enrouleur de ceinture de sécurité (10) est disposé sur le siège même, le siège de passager étant pourvu d'un dossier (40) rabattable, devant se bloquer avec la carrosserie du véhicule et un dispositif de verrouillage (16) étant disposé, avec une fonction de transmission de force, pour assurer le blocage du dossier (40) sur le carter (11) de l'enrouleur de ceinture (10) et le dispositif de verrouillage (16) coopérant avec un verrou (20) fixe par rapport au véhicule, caractérisé en ce que le dispositif de verrouillage (16) est équipé pour assurer le blocage du dossier (40), tant dans une position d'assise verticale du dossier qu'également dans une position rabattue de montée des passagers ou de chargement du dossier.

2. Siège de passager selon la revendication 1, caractérisé en ce que le dispositif de verrouillage (16) est réalisé sous forme d'un plateau à griffes mobile en rotation, qui coopère, dans les deux positions de blocage du dossier, avec des verrous (20,32) fixes par rapport au véhicule.

3. Siège de passager selon la revendication 2, caractérisé en ce que le plateau à griffes (16) présente un évidement (18), pour recevoir un boulon (19), fixe par rapport au véhicule et disposé sur un support (20), et en ce que le carter d'enrouleur de ceinture (11) présente un rétreint (21) convenant au logement du boulon (19), les axes médians de l'évidement (18) et du rétreint (21) se coupant.

4. Siège de passager selon la revendication 3, caractérisé en ce que l'adjonction du support (20) sert à assurer le verrouillage du dossier (40) dans sa position verticale et en ce que, dans cette position de verrouillage, le boulon (19) se trouve au plus profond du rétreint (21) du carter d'enrouleur de ceinture (16) et est entouré et fixé par l'évidement (18), qui le croise, du plateau à griffes (16).

5. Siège de passager selon la revendication 3 ou 4, caractérisé en ce que le plateau à griffes (16) est chargé par une force élastique (17) orientée vers sa position d'ouverture et est verrouillable et déverrouillable par l'intermédiaire d'un dispositif d'actionnement (27,28) maintenu sur le carter (11) de l'enrouleur de ceinture (10).

6. Siège de passager selon la revendication 5, caractérisé en ce qu'un verrou (22) chargé par un ressort est monté pivotant dans un évidement (24) du carter d'enrouleur de ceinture (11) et est placé, par une arête extérieure, dans la position de verrouillage du plateau à griffes (16), devant un ergot (23) réalisé sur ce dernier.

7. Siège de passager selon la revendication 5 ou 6, caractérisé en ce qu'un levier basculant (25), dont le pivotement autour d'un centre de rotation (26) écarte le verrou (22) dans l'évidement (24), par rapport à l'ergot (23) du plateau à griffes (16), est monté tournant dans le carter d'enrouleur de ceinture (11).

8. Siège de passager selon la revendication 7, caractérisé en ce que le pivotement du levier basculant (25) est susceptible d'être provoqué par un câble de Bowden (27).

9. Siège de passager selon la revendication 7, caractérisé en ce que le pivotement du levier basculant (25) est susceptible d'être provoqué par un poussoir (28) maintenu et guidé de manière correspondante.

10. Siège de passager selon l'une des revendications 2 à 9, caractérisé en ce que, sur une section qui est écartée par pivotement dans la position d'ouverture, le plateau à griffes (16) présente un ergot de maintien (30) qui saisit, par l'arrière, un dispositif de maintien (32) monté fixe sur la carrosserie, lorsque le dossier est en position rabattue.

11. Siège de passager selon la revendication 10, caractérisé en ce que le dispositif de maintien est composé d'un plateau de maintien (32), fixé tournant sur la carrosserie et chargé par un ressort, plateau de maintien (32) dont l'actionnement est susceptible d'être provoqué par un câble de Bowden (33).

12. Siège de passager selon l'une des revendication 1 à 11, caractérisé en ce que le carter (11) est composé de deux parties monobloc et symétriques de carter, dans lesquelles sont montés, tant l'arbre d'enroulement de ceinture (12) qu'également le dispositif de verrouillage (16,22) pour le verrouillage de dossier.

Fig. 1

Fig. 2

Fig. 3

Fig. 4